# EUROPÄISCHE PATENTSCHRIFT

(11) **EP 0 827 864 B1**
(45) Veröffentlichungstag und Bekanntmachung des Hinweises auf die Patenterteilung: **09.01.2002**
(21) Anmeldenummer: 97110087.0
(22) Anmeldetag: 20.06.1997
(51) Int. Cl.: B60N 2/48

(54) **Nackenstützen-Entriegelung**
Unlocking device for a neck support
Dispositif de déverrouillage d'un soutien de cou

(30) Priorität: 27.08.1996 DE 19634548
(43) Veröffentlichungstag der Anmeldung: 11.03.1998
(73) Patentinhaber: ROBERT BOSCH GMBH, 70442 Stuttgart (DE)
(72) Erfinder: Bauer, Peter-Josef, 77815 Bühl (DE); Dilger, Werner, Ing. (grad.), 77815 Bühl (DE)

(56) Entgegenhaltungen:
- DE-A- 3 828 503
- US-A- 4 596 403
- US-A- 4 834 456
- US-A- 5 222 784

## Beschreibung

### Stand der Technik

Die vorliegende Erfindung geht aus von einer Nakkenstütze gemäß dem im Dokument US 4 834 456 A offenbarten Oberbegriff des Hauptanspruchs.

Moderne Kraftfahrzeuge weisen im allgemeinen auch auf den Rücksitzen Nackenstützen auf. Damit diese die Sicht nach hinten nicht versperren, sind sie häufig klappbar ausgeführt, das heißt die Nackenstützen befinden sich, solange sie nicht benötigt werden, in einer nach hinten geklappten Ruhestellung und können bei Bedarf aufgestellt werden. In der aufgestellten Position, das heißt der Betriebsstellung, muß die Nackenstütze gesichert sein, um ein unerwünschtes Umklappen zu verhindern und so ihre Funktion zu gewährleisten. Zum Umklappen der Nackenstütze in die Ruhestellung ist eine Entsicherung notwendig. Bekannt ist es, die Entsicherung mittels eines Magneten durchzuführen. Eine weitere Ausführungsweise dieser Entsicherung ist im Dokument US 4 596 403 A offenbart, bei dem die Verstellung der Nackenstütze manuell stattfindet.

### Vorteile der Erfindung

Die Erfindung betrifft eine Nackenstütze, insbesondere für die Rückenlehne eines Fahrzeugsitzes, vorzugsweise eines Fahrzeugrücksitzes, mit einem in einem Antriebsgehäuse angeordneten Motor und einem von einer gesicherten Betriebsstellung in eine Ruhestellung umklappbaren Stützkissen, wobei das Stützkissen motorgetrieben entsicherbar und mittels Federkraft in die Ruhestellung umklappbar ist. Im Zusammenhang mit der vorliegenden Erfindung wird unter einer Nackenstütze die Funktionseinheit aus Motor, mechanischen Verbindungs- und Sicherungselementen und Stützkissen verstanden. Unter einer Betriebsstellung des Stützkissens wird die Position verstanden, in der das Stützkissen seine Funktion ausübt, das heißt in aufgestellter Position. In der Ruhestellung befindet sich das Stützkissen vor oder hinter der Rückenlehne.

Die erfindungsgemäße Nackenstütze weist in vorteilhafter Weise einen kleinbauenden Antrieb auf und benötigt nur einen kurzen Impuls zur Entriegelung des Stützkissens. In besonders vorteilhafter Weise ist der Strombedarf des vorzugsweise verwendeten Gleichstrommotors gering, da die Erfindung einen lastfreien Anlauf der motorgetriebenen Elemente vorsieht. Zudem sind in vorteilhafter Weise keine Abschaltkontakte für den Motor notwendig, da der Antrieb in Endlage mechanisch blockiert ist.

In besonders bevorzugter Ausführungsform betrifft die Erfindung eine Nackenstütze der vorgenannten Art, wobei ein motorgetriebenes drehbar gelagertes Element mit einem drehbar gelagerten Kopplungssegment zur Entsicherung des Stützkissens so zusammenwirkt, daß sich ein über Kopplungselemente mit dem Kopplungssegment gekoppelter Sicherungsriegel von einer Sicherungsstellung in eine Entsicherungsstellung bewegt. Bevorzugt weist das Kopplungssegment ein eine erste Anschlagfläche aufweisendes Hakenteil und ein eine zweite Anschlagfläche aufweisendes Sockelteil auf, wobei das Kopplungselement um eine den Sockelteil durchsetzende Achse von einer Sperrstellung (Sicherung) in eine Freigabestellung (Endsicherung) verschwenkbar ist.

In bevorzugter Weise weist das drehbar um eine Achse gelagerte Element, das insbesondere ein von dem Motor über eine Schnecke angetriebenes Schnekkenrad ist, mindestens einen Zapfen auf, wobei in besonders vorteilhafter Weise der Zapfen starr mit dem Schneckenrad verbunden ist. Der Zapfen des drehbar gelagerten Elements steht in Sperrstellung des Kopplungssegmentes frei in dessen Schwenkbereich, wobei seine Drehbeweglichkeit ermöglicht, daß der Zapfen mit einer ersten Anschlagfläche des Kopplungssegmentes in Kontakt treten und das Kopplungssegment in eine Freigabestellung drängen kann. In der Freigabestellung ist das Kopplungssegment in die dem Sicherungsriegel abgewandte Richtung verschwenkt und entsichert diesen über die dazwischen angeordneten Kopplungselemente. Das Kopplungssegment weist vorteilhafterweise eine zweite Anschlagfläche auf, die so am Sockelteil angeordnet ist, daß sie bei einer Drehbewegung des Kopplungssegmentes in den Schwenkbereich des Zapfens gelangt und eine weitere Drehung des Kopplungssegmentes verhindert.

Das Kopplungssegment ist über Kopplungselemente mit dem drehbar gelagerten Sicherungsriegel gekoppelt, der das beispielsweise über Holme in die Rükkenlehne eingelassene Stützkissen sichert beziehungsweise entsichert. Der Sicherungshebel greift in Sicherungsstellung beispielsweise in an den Holmen vorhandene Ausnehmungen ein und arretiert die Holme in aufgestellter Position. In Entsicherungsstellung sind die Holme freigegeben und können umgeklappt werden. Die Kopplungselemente sind vorteilhafterweise als Kopplungsstange und als ein mit der Kopplungsstange verbundener, schwenkbeweglich um eine feststehende Achse gelagerter Kopplungshebel ausgebildet. In Sicherungsstellung blockiert der Kopplungshebel eine Drehbewegung des Sicherungsriegels, indem er den Riegel über eine formschlüssige Verbindung in dessen Sicherungsstellung hält.

Zur Entsicherung des Stützkissens wird über ein Steuersignal der Motor in Drehung versetzt. über Schnecke und Schneckenrad wird der Zapfen aus seiner frei im Schwenkbereich des Kopplungssegmentes stehenden Position so in die dem Sicherungsriegel abgewandte Richtung weiterbewegt, daß er mit der ersten Anschlagfläche des Kopplungssegmentes in Kontakt kommt und das Segment so weit verschwenkt, daß über die Kopplungsstange der Kopplungshebel entgegen einer auf ihn wirkenden Federkraft vom Sicherungshebel weg bewegt wird und den Sicherungsriegel freigibt. Der Sicherungsriegel ist nun nicht mehr arretiert, so daß die Holme freigegeben und umgeklappt werden können. Die Nackenstütze kann nun mittels Federkraft in Ruhestellung umklappen. Durch die Drehung des Kopplungssegmentes wird eine zweite Anschlagfläche in den Drehkreis des Zapfens geschwenkt, an der der Zapfen nach Durchlaufen des weiteren Drehwinkels zur Anlage kommt und in seiner weiteren Bewegung blockiert wird. Das Zurückdrehen des Kopplungssegmentes wird verhindert, in dem sich der Kopplungshebel am in der Entsicherungsstellung befindlichen Sicherungsriegel abstützt. Um das Stützkissen wieder in Betriebsstellung zu bringen, wird dieses beispielsweise manuell aufgestellt. Dabei bewegt sich der Sicherungsriegel in seine Sicherungsstellung und gibt dabei den Kopplungshebel frei, der sich mittels Federkraft in Sicherungsstellung zurückbewegt. Dabei führt der Hebel die mit ihm verbundene Koppelstange und das damit verbundene Kopplungssegment in Richtung Sicherungsriegel mit, wobei die zweite Anschlagfläche aus dem Zapfendrehkreis herausgeschwenkt wird, so daß der Zapfen bei einem erneuten Startvorgang lastfrei anlaufen kann.

Das erfindungsgemäß vorgesehene Kopplungssegment weist demgemäß zwei Arbeitsstellungen auf, eine erste, in der der motorgetriebene Zapfen frei im Schwenkbereich des Kopplungssegmentes steht und dieses eine dem Sicherungsriegel zugewandte Sperrstellung einnimmt. In der Sperrstellung des Kopplungssegementes ist der Kopplungshebel dem Sicherungsriegel zugewandt und drängt ihn in Sicherungsstellung. Durch Drehung des Zapfens in die dem Sicherungsriegel abgewandte Richtung wird das Kopplungssegment in seine zweite Arbeitsstelllung, die Freigabestellung gedrängt, zieht dabei den Kopplungshebel aus dessen Sicherungsstellung heraus, so daß sich der Sicherungsriegel in Entsicherungsstellung bewegen und das mit Federkraft beaufschlagte Stützkissen nach hinten umklappen kann.

Weitere vorteilhafte Ausgestaltungen der Erfindung sind den Unteransprüchen entnehmbar.

### Zeichnungen

Die Erfindung wird nachfolgend in einem Ausführungsbeispiel anhand der zugehörigen Zeichnungen näher erläutert. Es zeigen:
- Figur 1: einen schematischen Längsschnitt einer erfindungsgemäßen Nackenstütze und
- Figur 2: eine detaillierte Ansicht eines Ausschnitts aus der Figur 1.

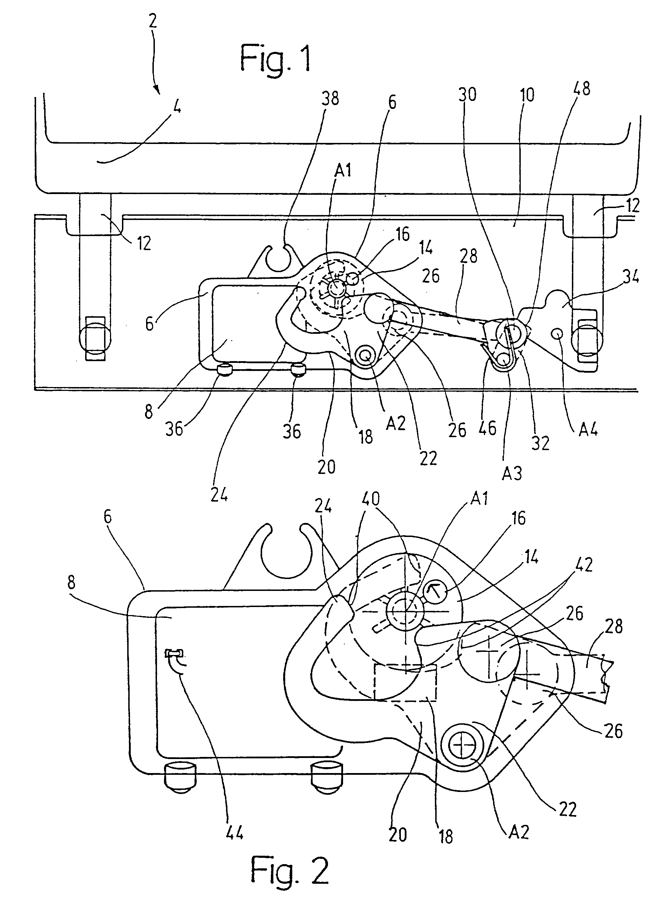

Die Figur 1 zeigt eine erfindungsgemäße Nackenstütze 2 mit einem Stützkissen 4 und einem in einem Antriebsgehäuse 6 befindlichen Gleichstrommotor 8. Das Antriebsgehäuse 6 befindet sich in der Rückenlehne 10, die über in die Lehne 10 eingelassene Stützholme 12 mit dem Stützkisssen 4 verbunden ist. In dem Antriebsgehäuse 6 befindet sich ein starr mit einem Schneckenrad 14 verbundener Zapfen 16. Das Schneckenrad 14 wird durch den Motor 8 über eine Schnecke 18 angetrieben und entgegen dem Uhrzeigersinn gedreht.

Im Antriebsgehäuse 6 befindet sich außerdem das Kopplungssegment 20, das aus einem Sockelteil 22 und einem Hakenteil 24 so aufgebaut ist, daß sich im Längsschnitt im wesentlichen ein U-Profil ergibt. Das Kopplungssegment 20 ist in der Figur 1 in durchzogener Darstellungsweise in Freigabestellung und in gestrichelter Darstellung in Sperrstellung dargestellt. Der Sockelteil 22 des Kopplungssegmentes 20 ist über ein Verbindungselement 26, beispielsweise eine Schraube, mit der kopplungsstange 28 verbunden. Die Kopplungsstange 28 ist mittels eines weiteren Verbindungselementes 30 mit dem Kopplungshebel 32 verbunden, der durch die Feder 46 mit einer in Richtung des Sicherungsriegels 34 wirkenden Kraft beaufschlagt ist. Der Kopplungshebel 32 ist drehbeweglich um eine Achse A3, die senkrecht zur Längsachse der Kopplungsstange 28 steht, gelagert. Im Drehbereich des Kopplungshebels 32 ist der Sicherungsriegel 34 angeordnet, der drehbeweglich um eine ebenfalls senkrecht zur Längsachse der Kopplungsstange 28 stehende Drehachse A4 angeordnet ist. Der Sicherungsriegel 34 weist in seinem dem Kopplungshebel 32 zugewandten Bereich eine Ausnehmung 48 auf, in die in Sicherungsstellung ein dem Sicherungsriegel 34 zugewandter Bereich des Kopplungshebels 32 formschlüssig eingreift.

Die Figur 1 stellt ferner Einsteckpunkte 36 dar, die dem Einstecken des Gehäuses 6 in die Rückenlehne dienen, sowie einen Anschraubpunkt 38 zur Befestigung des Antriebsgehäuses 6 in der Rückenlehne.

Die Figur 2 stellt eine Detailansicht eines Ausschnitts der Figur 1 dar. Die Figur 2 verdeutlicht die Anordnung des durch den Gleichstrommotor 8 über die Schnecke 18 angetriebenen und drehbeweglich um die Drehachse A1 angeordneten Schneckenrades 14, das einen Zapfen 16 aufweist. Dieser Zapfen 16 ist mit seiner Längsachse parallel zu der Längsachse A1 des Schneckenrades 14 orientiert, also senkrecht zu der Längsachse der Kopplungsstange 28. Drehbeweglich um die Drehachse A2 ist das Kopplungssegment 20 mit seinem Sockelteil 22 und seinem Hakenteil 24 angeordnet. Die Figur 2 stellt das Kopplungssegment 20 in durchgezogener Darstellung in Freigabestellung und in gestrichelter Darstellung in Sperrstellung dar. Dabei ist zu erkennen, daß das Verbindungselement 26 in Freigabestellung aufgrund des Verschwenkens um die Achse A2 in Richtung des Schneckenrades 14 gegenüber seiner Position in Sperrstellung versetzt ist, so daß dementsprechend auch die Kopplungsstange 28 und der Kopplungshebel 32 in Richtung auf das Schneckenrad 14 hin versetzt sind und so der Sicherungsriegel 34 freigegeben ist. Der Hakenteil 24 weist auf seiner endständigen Fläche eine erste Anschlagfläche 40 auf, auf die der Zapfen 16 bei Drehung gegen den Uhrzeigersinn stößt. Der Sockelteil 22 weist in seinem dem Hakenteil 24 zugewandten Bereich eine zweite Anschlagfläche 42 auf, auf die der Zapfen 16 stößt, nachdem das Kopplungselement 20 in Freigabestellung gebracht wurde.

Der Figur 2 ist außerdem die Anordnung eines Steckanschlusses 44 zur Strom- und Signalversorgung des Motors 8 zu entnehmen.

Die Funktionsweise der erfindungsgemäßen Nackenstütze 2 stellt sich wie folgt dar.

In Betriebsstellung befindet sich das Stützkissen 4 in aufrechter Position und ist gesichert. Der Zapfen 16 steht dabei frei im Schwenkbereich des in Richtung Sicherungsriegel 34 verschwenkten Kopplungssegmentes 20 (gestrichelte Darstellung in Figur 1 und 2). Über die Kopplungsstange 28 und den Kopplungshebel 32, der in eine entsprechend ausgeformte Ausnehmung 48 des Sicherungsriegels 34 greift, wird der Sicherungsriegel 34 in seiner Sicherungsstellung gehalten, die ein Umklappen des Stützkissens 4 verhindert. Zum Abklappen des an den Holmen 12 angebrachten Stützkissens 4 wird über ein Steuersignal der Gleichstrommotor 8 in Drehung versetzt. über Schnecke 18 und Schneckenrad 14 wird der Zapfen 16 in die dem Sicherungsriegel 34 abgewandte Richtung so weiter bewegt, daß er mit der ersten Anschlagfläche 40 des Kopplungssegmentes 20 in Kontakt kommt und in Folge seiner Drehbewegung das Kopplungssegment 20 in seine Freigabestellung (durchgezogene Darstellung) verschwenkt. Dabei wird über die mit dem Kopplungssegment 20 verbundene Kopplungsstange 28 der Kopplungshebel 32 aus dem Eingriffsbereich des Sicherungsriegels 34 herausbewegt und gibt diesen frei, so daß das Stützkissen mittels Federkraft in seine Ruhestellung klappen kann. Durch die Drehbewegung des Kopplungssegmentes 20 wird die zweite Anschlagfläche 42 in den Drehkreis des Zapfens 16 geschwenkt, an der der Zapfen 16 nach Durchlaufen des weiteren Drehwinkels zur Anlage kommt und so ein Weiterdrehen des Zapfens 16 verhindert wird. Es sind daher keine gesonderten Abschaltkontakte für den Antrieb notwendig. Das Zurückdrehen des Kopplungssegmentes 20 wird verhindert, indem sich der Kopplungshebel 32 am Sicherungsriegel 34 abstützt. Um das Stützkissen 4 wieder in Betriebsstellung aufzurichten, wird durch eine von außen eingeleitete Bewegung das Stützkissen nach oben geklappt, wobei sich der Sicherungsriegel 34 in seine Sicherungsstellung bewegt und dabei den Kopplungshebel 32 freigibt, der sich mittels Federkraft in seine Sicherungsstellung (gestrichelt dargestellt) zurückbewegen kann. Dabei nimmt der Kopplungshebel 32 die Kopplungsstange 28 und das Kopplungssegment 20 mit und schwenkt dabei die zweite Anschlagfläche 42 aus dem Drehkreis des Zapfens 16 heraus, so daß der Zapfen 16 bei einem erneuten Startvorgang lastfrei anlaufen kann.

## Patentansprüche

1. Nackenstütze, insbesondere für die Rückenlehne eines Fahrzeugsitzes, mit einem in einem Antriebsgehäuse (6) angeordneten Motor (8) und einem von einer gesicherten Betriebsstellung in eine Ruhestellung umklappbaren Stützkissen, **dadurch gekennzeichnet, daß** das Stützkissen (4) mechanisch über ein Sicherungselement entsicherbar und mittels Federkraft in die Ruhestellung umklappbar ist, und daß ein motorgetriebenes, drehbar gelagertes Element (14) das Sicherungselement (34) zwischen einer Sicherungs- und der Entsicherungsstellung zu verstellen vermag.

2. Nackenstütze nach Anspruch 1, **dadurch gekennzeichnet, daß** das motorgetriebene, drehbar gelagerte Element (14) mit einem verschwenkbar gelagerten Kopplungssegment (20) zur Entsicherung des Stützkissens (4) so zusammenwirken kann, daß sich das über mindestens ein Kopplungselement (28,32) mit dem ersten Kopplungssegment (20) gekoppeltes als Sicherungsriegel (34) ausgebildetes Sicherungselement in eine Entsicherungsstellung bewegt.

3. Nackenstütze nach Anspruch 2, **dadurch gekennzeichnet, daß** das Kopplungssegment (20) aus einem eine erste Anschlagfläche (40) aufweisenden Hakenteil (24) und einem eine zweite Anschlagfläche (42) aufweisenden Sockelteil (22) besteht.

4. Nackenstütze nach Anspruch 3, **dadurch gekennzeichnet, daß** das Kopplungssegment (20) um eine den Sockelteil (22) durchsetzende Achse (A2) von einer Sperrstellung in eine Freigabestellung und umgekehrt verschwenkbar ist.

5. Nackenstütze nach einem der Ansprüche 2 bis 4, **dadurch gekennzeichnet, daß** das um eine Achse (A1) drehbar gelagerte Element (14) mindestens einen Zapfen (16) aufweist.

6. Nackenstütze nach einem der Ansprüche 2 bis 5, **dadurch gekennzeichnet, daß** das drehbar gelagerte Element ein vom Motor (8) über eine Schnecke (18) angetriebenes Schneckenrad (14) ist.

7. Nackenstütze nach einem der Ansprüche 5 bis 6, **dadurch gekennzeichnet, daß** der Zapfen (16) starr mit dem Schneckenrad (14) verbunden ist.

8. Nackenstütze nach einem der Ansprüche 5 bis 7, **dadurch gekennzeichnet, daß** der Zapfen (16) des drehbar gelagerten Elementes in Sperrstellung des Kopplungssegmentes (20) frei in dessen Schwenkbereich steht.

9. Nackenstütze nach einem der Ansprüche 5 bis 8, **dadurch gekennzeichnet, daß** das drehbar gelagerte Element mit dem Zapfen (16) so bewegbar ist, daß der Zapfen (16) mit der ersten Anschlagfläche (40) des Kopplungssegments (20) in Kontakt kommen und das Kopplungssegment (20) in die Freigabestellung drängen kann.

10. Nackenstütze nach einem der Ansprüche 5 bis 9, **dadurch gekennzeichnet, daß** die zweite Anschlagfläche (42) des Kopplungssegmentes (20) so angeordnet ist, daß diese bei einer Drehbewegung des Kopplungssegmentes (20) in den Schwenkbereich des Zapfens (16) gelangt und eine weitere Drehung des Kopplungssegmentes (20) verhindert.

11. Nackenstütze nach einem der Ansprüche 2 bis 10, **dadurch gekennzeichnet, daß** die Kopplungselemente als Kopplungsstange (28) und als mit der Kopplungsstange (28) verbundener Kopplungshebel (32) ausgeführt sind, wobei der Kopplungshebel (32) drehbar um eine Achse (A3) angeordnet ist.

12. Nackenstütze nach Anspruch 11 **dadurch gekennzeichnet, daß** das Kopplungssegment (20), das Schneckenrad (14), der Kopplungshebel (32) und der Sicherungsriegel (34) um senkrecht zur Längsachse der Kopplungsstange (28) stehende Achsen (A1,A2,A3,A4) drehbar gelagert sind.

13. Nackenstütze nach Anspruch 2, **dadurch gekennzeichnet, daß** das Kopplungssegment (20) und das drehbar gelagerte Element im Antriebsgehäuse (6) angeordnet sind.

14. Nackenstütze nach Anspruch 11, **dadurch gekennzeichnet, daß** der Kopplungshebel (32) und der Sicherungsriegel (34) außerhalb des Antriebsgehäuses (6) angeordnet sind.

15. Nackenstütze nach Anspruch 11, **dadurch gekennzeichnet, daß** der Kopplungshebel (32) in Sperrstellung des Kopplungssegmentes (20) in Eingriff mit dem Sicherungsriegel (34) steht und diesen in der Sicherungsstellung arretiert.

16. Nackenstütze nach Anspruch 11, **dadurch gekennzeichnet, daß** der Kopplungshebel (32) in der Freigabestellung des Kopplungssegmentes (20) in Richtung des Kopplungssegmentes (20) verschwenkt wird und den Sicherungsriegel (34) freigibt.

17. Nackenstütze nach Anspruch 11, **dadurch gekennzeichnet, daß** der Kopplungshebel (32) durch Federkraft in seine Sicherungsstellung bewegbar ist.

## Claims

1. Neck rest, in particular for the backrest of a vehicle seat, having a motor (8) which is arranged in a drive housing (6) and a supporting cushion which can be folded over from a secured operating position into an inoperative position, **characterized in that** the supporting cushion (4) can be released mechanically by a securing element and can be folded over into the inoperative position by means of spring force, and **in that** a motor-driven, rotatably mounted element (14) is capable of adjusting the securing element (34) between a securing position and the release position.

2. Neck rest according to Claim 1, **characterized in that**, for the purpose of releasing the supporting cushion (4), the motor-driven, rotatably mounted element (14) can interact with a pivotably mounted coupling segment (20) in such a manner that the securing element, which is coupled to the first coupling segment (20) via at least one coupling element (28, 32), and is designed as a securing latch (34), moves into a release position.

3. Neck rest according to Claim 2, **characterized in that** the coupling segment (20) comprises a hook part (24) having a first stop surface (40) and a base part (22) having a second stop surface (42).

4. Neck rest according to Claim 3, **characterized in that** the coupling segment (20) can be pivoted from a blocking position into a disengaging position and vice versa about an axis (A2) passing through the base part (22).

5. Neck rest according to one of Claims 2 to 4, **characterized in that** the element (14) which is mounted such that it can rotate about an axis (A1) has at least one pin (16).

6. Neck rest according to one of Claims 2 to 5, **characterized in that** the rotatably mounted element is a worm wheel (14) which is driven by the motor (8) via a worm (18).

7. Neck rest according to one of Claims 5 to 6, **characterized in that** the pin (16) is connected rigidly to the worm wheel (14).

8. Neck rest according to one of Claims 5 to 7, **characterized in that**, in the blocking position of the coupling segment (20), the pin (16) of the rotatably mounted element lies freely in the pivoting region of the said segment.

9. Neck rest according to one of Claims 5 to 8, **characterized in that** the rotatably mounted element can be moved by the pin (16) in such a manner that the pin (16) can come into contact with the first stop surface (40) of the coupling segment (20) and can push the coupling segment (20) into the disengaging position.

10. Neck rest according to one of Claims 5 to 9, **characterized in that** the second stop surface (42) of the coupling segment (20) is arranged in such a manner that during a rotational movement of the coupling segment (20) said stop surface passes into the pivoting region of the pin (16) and prevents further rotation of the coupling segment (20).

11. Neck rest according to one of Claims 2 to 10, **characterized in that** the coupling elements are designed as a coupling rod (28) and as a coupling lever (32) which is connected to the coupling rod (28), the coupling lever (32) being arranged such that it can rotate about an axis (A3).

12. Neck rest according to Claim 11, **characterized in that** the coupling segment (20), the worm wheel (14), the coupling lever (32), and the securing latch (34) are mounted such that they can rotate about axes (A1, A2, A3, A4) which are perpendicular with respect to the longitudinal axis of the coupling rod (28).

13. Neck rest according to Claim 2, **characterized in that** the coupling segment (20), and the rotatably mounted element are arranged in the drive housing (6).

14. Neck rest according to Claim 11, **characterized in that** the coupling lever (32) and the securing latch (34) are arranged outside the drive housing (6).

15. Neck rest according to Claim 11, **characterized in that** in the blocking position of the coupling segment (20) the coupling lever (32) is in engagement with the securing latch (34) and locks the latter in the securing position.

16. Neck rest according to Claim 11, **characterized in that** in the disengaging position of the coupling segment (20) the coupling lever (32) is pivoted in the direction of the coupling segment (20) and disengages the securing latch (34).

17. Neck rest according to Claim 11, **characterized in that** the coupling lever (32) can be moved into its securing position by spring force.

## Revendications

1. Appui-tête, en particulier pour le dossier d'un siège d'un véhicule automobile, comprenant un moteur (8) logé dans un boîtier d'entraînement (6) et un coussin d'appui (4) pouvant passer par rabattement d'une position de service verrouillée à une position de repos,
**caractérisé en ce que**
le coussin (4) peut être déverrouillé mécaniquement par un élément de sécurité et rabattu en position de repos par une force élastique, et un élément (14) monté en rotation et entraîné par un moteur permet de déplacer l'élément de sécurité (34) entre la position de verrouillage et une position non verrouillée.

2. Appui-tête selon la revendication 1,
**caractérisé en ce que**
l'élément pivotant (14), entraîné par un moteur peut, pour déverrouiller le coussin d'appui (4), coopérer avec un élément d'accouplement (20) monté basculant de manière que l'élément de sécurité constitué par un verrou de sécurité (34) accouplé au premier élément d'accouplement (20), par au moins un élément d'accouplement (28, 32), se déplace pour venir en position de déverrouillage.

3. Appui-tête selon la revendication 2,
**caractérisé en ce que**
l'élément d'accouplement (20) est constitué d'une partie formant crochet (24) présentant une première portée de butée (40) et d'une partie formant socle (22) présentant une seconde portée de butée (42).

4. Appui-tête selon la revendication 3,
**caractérisé en ce que**
l'élément d'accouplement (20) peut tourner autour d'un axe (A2) traversant le socle (22) pour passer d'une position d'arrêt à une position de libération.

5. Appui-tête selon l'une quelconque des revendications 2 à 4,
**caractérisé en ce que**
l'élément (14) monté tournant autour d'un axe (A1) porte au moins un ergot (16).

6. Appui-tête selon l'une quelconque des revendications 2 à 5,
**caractérisé en ce que**
l'élément monté tournant est une roue tangente (14) entraînée par le moteur (8) par l'intermédiaire d'une vis tangente (18).

7. Appui-tête selon l'une des revendications 5 ou 6,
**caractérisé en ce que**
l'ergot (16) est fixé rigidement sur la roue tangente (14).

8. Appui-tête selon l'une quelconque des revendications 5 à 7,
**caractérisé en ce que**
l'ergot (16) porté par l'élément tournant, quand l'élément d'accouplement (20) est en position d'arrêt, est libre dans la zone de basculement de cet élément.

9. Appui-tête selon l'une quelconque des revendications 5 à 8,
**caractérisé en ce que**
l'élément tournant, avec son ergot (16) peut se déplacer de manière que cet ergot vienne en contact avec la première portée de butée (40) de l'élément d'accouplement (20) et pousse celui-ci en position de libération.

10. Appui-tête selon l'une quelconque des revendications 5 à 9,
**caractérisé en ce que**
la seconde portée de butée (42) de l'élément d'accouplement (20) est disposée de manière à venir, par une rotation de l'élément d'accouplement (20), dans la zone de basculement de l'ergot (16) et empêcher ainsi cet élément (20) de continuer à tourner.

11. Appui-tête selon l'une quelconque des revendications 2 à 10,
**caractérisé en ce que**
les éléments d'accouplement sont constitués par une tige d'accouplement (28) et un levier d'accouplement (32) relié à celle-ci, ce levier (32) étant monté tournant autour d'un axe (A3).

12. Appui-tête selon la revendication 11,
**caractérisé en ce que**
l'élément d'accouplement (20), la roue à vis (14), le levier d'accouplement (32) et le verrou de sécurité (34) peuvent tourner respectivement autour d'axes (A1, A2, A3, A4) perpendiculaires à l'axe longitudinal de la tige d'accouplement (28).

13. Appui-tête selon la revendication 2,
**caractérisé en ce que**
l'élément d'accouplement (20) et l'élément tournant sont montés dans le boîtier d'entraînement (6).

14. Appui-tête selon la revendication 11,
**caractérisé en ce que**
le levier d'accouplement (32) et le verrou de sécurité (34) se trouvent à l'extérieur du boîtier d'entraînement (6).

15. Appui-tête selon la revendication 11,
**caractérisé en ce que**
le levier d'accouplement (32), quand l'élément d'accouplement (20) est en position d'arrêt, est en prise avec le verrou de sécurité (34) et bloque celui-ci en position de sécurité.

16. Appui-tête selon la revendication 11,
**caractérisé en ce que**
le levier d'accouplement (32), quand l'élément d'accouplement (20) est en position de libération, est basculé en direction de l'élément d'accouplement (20) et libère le verrou de sécurité (34).

17. Appui-tête selon la revendication 11,
**caractérisé en ce que**
le levier d'accouplement (32) peut être amené en position de sécurité par la force d'un ressort.
